(19) Europäisches Patentamt
European Patent Office
Office européen des brevets

(11) Publication number: **0 409 312 A2**

# (12) EUROPEAN PATENT APPLICATION

(21) Application number: **90201854.8**

(22) Date of filing: **10.07.90**

(51) Int. Cl.5: **C08G 64/14**, C08G 64/12, C08G 69/18

(30) Priority: **19.07.89 IT 2122689**

(43) Date of publication of application: **23.01.91 Bulletin 91/04**

(84) Designated Contracting States: **AT BE CH DE DK ES FR GB GR LI LU NL SE**

(71) Applicant: **MONTEDIPE S.r.l.**
**16, Piazza della Repubblica**
**I-20124 Milan(IT)**

(72) Inventor: **Petri, Alberto**
**Via B. Bellincione 10**
**I-20134 Milan(IT)**
Inventor: **Poggio, Sergio**
**Via Pecorini 14**
**I-20138 Milan(IT)**

(74) Representative: **Roggero, Sergio et al**
**Ing. Barzanò & Zanardo Milano S.p.A. Via Borgonuovo 10 10**
**I-20121 Milano(IT)**

## (54) High-fluidity polycarbonates and process for preparing them.

(57) Linear, thermoplastic, aromatic polycarbonates having an average viscosimetric molecular weight comprised within the range of from 10,000 to 30,000, endowed with high fluidity in the molten state, are obtained by means of the use of chain capping agents of phenol-amidic nature, having the general formula:

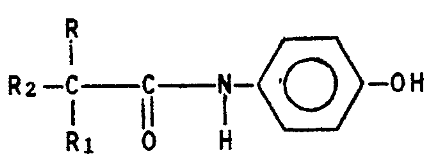

(II)

wherein:
R, $R_1$, which can be either equal to, or different from, each other, are H or $CH_3$;
$R_2$ is an either linear or branched alkyl radical, containing from 1 to 7 carbon atoms, or a cycloalkyl or alkylene-cycloalkyl radical of from 5 to 7 carbon atoms, with said alkyl, cycloalkyl or alkylene-cycloalkyl radicals possibly bearing a halogen atom.

EP 0 409 312 A2

## HIGH-FLUIDITY POLYCARBONATES AND PROCESS FOR PREPARING THEM

The present invention relates to linear, thermoplastic, aromatic polycarbonates endowed with high fluidity in the molten state.

Polycarbonates are well-known in the art thanks to their excellent physical and mechanical properties, which render then particularly suitable for manufacturing products displaying high impact strength, and high dimensional stability and heat resistance.

The processing of polycarbonates by means of the moulding techniques requires the use of high temperatures, of from 270 to 320° C, which make it possible the molten polymer to be given the necessary fluidity in order to enable said molten polymer to be successfully submitted to fabrication processes.

However, the fluidity which one is capable of obtaining causes difficulty in case complex-shape parts are moulded, and furthermore does not make it possible fast moulding cycles to be accomplished.

Inasmuch as an increase in the fluidity of the molten polymer cannot be obtained by increasing the processing temperature over the above said values, owing to the arising of phenomena of degradation of the same polymer, the most widely used technique in order to improve the fluidity characteristics of the molten polymer consists of reducing the molecular weight of polycarbonate used.

The molecular weight of polycarbonates is usually controlled by means of the use, as chain capping agents, of monofunctional phenolic compounds, such as phenol, p- tert.-butyl-phenol and 2,6-dimethylphenol.

Unfortunately, the use of polycarbonates having a reduced molecular weight, obtained by means of the use of these chain capping agents, causes a decrease in the mechanical properties of the obtained products, in particular as relates to their impact strength.

This occurrence manifests itself as a sudden loss of ductility of polycarbonate at temperatures lower than room temperature.

Such a strength loss can be attenuated by using, in lieu of the above said chain capping agents, branched alkyl-phenolic compounds with 8 or 9 carbon atoms in their alkyl chain, as disclosed in U.S. patent No. 4,269,964.

The use of the above said chain capping agents does not anyway make it possible polycarbonate to be given a higher fluidity than as obtainable by using the traditional chain capping agents.

European patent application EP-249,882 discloses on the contrary the use of alkyl-phenolic chain capping agents, with an alkyl chain of from 4 to 7 carbon atoms.

The so obtained polycarbonates display an improved fluidity, but undergo a simultaneous decay of their thermal properties, with the consequent decrease of the temperature range within which the products obtained from them can be applied.

The present Applicant has found now that the drawbacks of the prior art can be overcome, and linear, thermoplastic, aromatic polycarbonates having an average viscosimetric molecular weight comprised within the range of from 10,000 to 30,000, endowed with high fluidity in the molten state and simultaneously displaying excellent mechanical and thermal properties can be obtained by means of the use of particular phenol-amidic compounds as chain capping agents.

Therefore, a purpose of the present invention are said linear, thermoplastic, aromatic polycarbonates having a high fluidity in the molten state.

A further purpose of the present invention is the process for obtaining said polycarbonates.

More particularly, in accordance with the present invention, said polycarbonates are obtained from

(1) at least one dihydroxyaromatic compound having the formula:

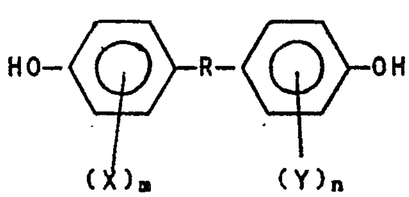

(I)

wherein:

R is a single bond, or a linear or branched, either substituted or non-substituted, alkylene radical of from 1 to 5 carbon atoms, or a group selected from among O, S, $SO_2$, CO;

X, Y which can be either equal to, or different from, each other, are H or $CH_3$,
m, n which can be either equal to or different from each other, are integers comprised within the range of from 1 to 4;
(2) a carbonate precursor;
(3) at least one phenol-amidic compound, as chain capping agent, having the formula:

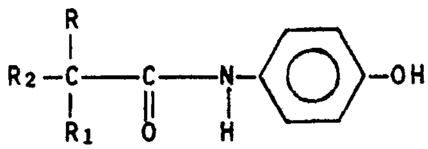

(II)

wherein:
R, $R_1$, which can be either equal to, or different from, each other, are H or $CH_3$;
$R_2$ is an either linear or branched alkyl radical, containing from 1 to 7 carbon atoms, or a cycloalkyl or alkylene-cycloalkyl radical of from 5 to 7 carbon atoms, with said alkyl, cycloalkyl or alkylene-cycloalkyl radicals possibly bearing a halogen atom.

Some examples of dihydroxyaromatic compounds (1) falling within the scope of formula (I) which can be used are, in particular:
* 4,4′-dihydroxybiphenyl;
* 2,2-bis-(4-hydroxyphenyl)-propane (bisphenol A);
* 2,2-bis-(3,5-dimethyl-4-hydroxyphenyl)-propane;
* bis-(4-hydroxyphenyl)-methane.

The carbonate precursor can be phosgene or an alkyl, aryl or arylalkyl ester of carbonic acid, such as, e.g., diphenyl carbonate, or can be a chloroformyl-capped polycarbonate oligomer having a molecular weight comprised within the range of from 400 to 2,000, obtained by means of the reaction of phosgene with a portion of the total amount of the dihydroxyaromatic compound (I).

The phenolamidic compounds (3) falling within the scope of general formula (II), to be used as chain capping agents according to the present invention, can be obtained by using methodologies known from organic chemistry.

In practice, they can be prepared in a simple way by means of the reaction of p-hydroxyaniline with the chloride of an acid of formula:

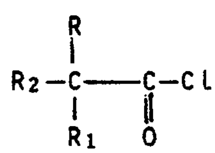

wherein:
R, $R_1$, $R_2$ have the same meaning as reported hereinabove,
with the reaction being carried out in an organic solvent, such as e.g., acetone or dioxane, at a temperature comprised within the range of from 50 to 100°C, and with a molar ratio of p-hydroxyaniline to the acyl chloride being used, which is twice as large as the stoichiometric value, such that hydrochloric acid developed may react with the amine excess.

Some examples of phenolamidic compounds of formula (II), particularly suitable for the purposes of the present invention, are the following:
* N-pivaloyl-p-hydroxyaniline;
* N-3,3-dimethyl-butanoyl-p-hydroxyaniline;
* N-3-cyclopentyl-propanoyl-p-hydroxyaniline;
* N-4-chloro-butanoyl-p-hydroxyaniline;
* N-butanoyl-p-hydroxyaniline.

The polycarbonates according to the present invention have an average viscosimetric molecular weight comprised within the range of from 10,000 to 30,000, and preferably have an average viscosimetric molecular weight comprised within the range of from 15,000 to 25,000.

According to the present invention, said high-fluidity polycarbonates can be prepared by reacting,

according to one among the polymerization techniques customarily used in order to produce polycarbonates:

(1) a dihydroxyaromatic compound falling within the scope of formula (I),

(2) a carbonate precursor,

(3) a phenolamidic compound of formula (II), as the chain capping agent, with the molar ratio of (3):(1) being comprised within the range of from 2:100 to 10:100, and being preferably comprised within the range of from 3.5:100 to 7:100.

One from the polymerization techniques which can be advantageously used is the so-said "interface polycondensation technique".

Such a technique consists of carrying out the reaction of polymerization in a biphasic system constituted by an alkaline solution, e.g., an aqueous solution of sodium hydroxide, and an organic solvent immiscible with water, such as, e.g., methylene chloride.

The dihydroxyaromatic compound (I) is dissolved in the aqueous phase, whilst the phenolamidic chain capping agent (3) is soluble in the organic phase.

Through such a double-phase system containing the dihydroxyaromatic compound (1) and the phenolamidic compound (3), phosgene gas is then bubbled and the reaction is then maintained at a temperature comprised within the range of from 15 to 25°C for a time comprised within the range of from 20 minutes to 6 hours, in the presence of a phase transfer catalyst, such as, e.g., triethylamine.

According to a preferred form of practical embodiment of the present invention, polycarbonates can be obtained by using, as carbonate precursors, chloroformyl-capped polycarbonate oligomers, which can be prepared by means of the interface reaction between phosgene and a portion of the total amount of dihydroxyaromatic compound (1).

Said chloroformyl-capped oligomers, having a molecular weight comprised within the range of from 400 to 2,000, are then dissolved in an organic solvent immiscible with water and are reacted, still according to the technique of the interface polycondensation, with the residual amount of dihydroxyaromatic compound (1), in the presence of the phenolamidic compound (3) as chain capping agent and a phase-transfer catalyst.

Alternatively to the interface polycondensation, the polycarbonates according to the present invention can be obtained according to the well-known methodology of solution polycondensation.

In this case, phosgene gas is bubbled through a solution of methylene chloride and pyridine, containing the dihydroxyaromatic compound (1) and the chain capping agent (3).

Said polycarbonates can be obtained as well by means of the technique of transesterification in the molten state, by reacting dialkyl, diaryl, or alkyl-aryl-esters of carbonic acid, as carbonate precursors, with the dihydroxyaromatic compound (1) and the phenolamidic compound (3), at a temperature comprised within the range of from 100 to 300°C, in the presence of transesterification catalysts.

The polycarbonates according to the present invention, obtained by using as chain capping agents the phenolamidic compounds falling within the scope of formula (II), show a very high fluidity, as it can be clearly seen from the following examples, and display excellent mechanical properties, above all as regards their impact strength at lower than room temperatures.

They are suitable for being fabricated by injection moulding and, thanks to their above said characteristics, can be advantageously used in order to manufacture complex-shaped parts.

Furthermore, said polycarbonates make it possible fast moulding cycles to be accomplished, with the advantage that increases in throughput and productivity, and decreases in costs are accomplished.

On the polycarbonates according to the present invention, the following characterizing tests were carried out.

## Melt Flow Index (MFI)

The extrusion rate of the molten polymer ("MFI") is determined by means of the "melt indexer" on the extruded granule, according to ASTM D 1238, under the following operating conditions: load 1.2 kg, temperature 300°C.

## (IZOD) Impact Strength

Izod impact strength is evaluated on specimens with notch, according to ASTM D 256, within the temperature range of from 23 to 0°C.

Vicat

This property is evaluated according to ASTM D 1575 ("A" Condition).

Inherent Viscosity (η)

The inherent viscosity is evaluated in methylene chloride at 20 °C by means of the Ubbelhode viscometer, and is expressed as dl/g.

The following experimental Examples are reported for merely illustrative purposes, and in no way shall they be construed as being limitative of the purview of the same invention.

## Example 1

### Preparation of N-pivaloyl-p-hydroxyaniline

48.6 g (446 mmol) of p-aminophenol dissolved in 150 ml of acetone is charged to a 4-necked flask of 250 ml equipped with magnetic stirrer, thermometer and reflux condenser, by operating under a blanketing atmosphere of an inert gas.

To this solution 26.9 g (223 mmol) of pivaloyl chloride dissolved in 40 ml of acetone is then added dropwise over a 15-minutes time, and the so obtained mixture is then heated to its boiling temperature and is kept three hours at said temperature.

The reaction mixture is then allowed to cool down to room temperature and is finally poured in 4 litres of deionized water kept with stirring.

Approximately one hour later, the precipitated product is recovered by filtration. The filter cake is washed with deionized water (4 portions of 500 ml each), and is dried in vacuo at 120 °C for 4 hours.

34.4 g of N-isopentanoyl-p-hydroxyaniline, equivalent to a yield of 80%, is obtained.

The obtained product was characterized as follows:

| | |
|---|---|
| * Melting point (DSC) = | 172 °C |
| * (Acidimetric) equivalent weight = | 191.4 |
| (Theoretical value) = | 193 |

| * Elemental Analysis : | | | |
|---|---|---|---|
| | C | H | N |
| Experimental, % | 68.3 | 7.8 | 7.4 |
| Theoretical, % | 68.4 | 7.8 | 7.3 |

The structure of the product was confirmed by N.M.R. spectroscopic analysis and mass spectrometry.

## Example 2

### Preparation of N-3,3-dimethylbutanoyl-p-hydroxy-aniline

The product of the title is prepared by operating in the same way as of Example 1, with 40 g (366 mmol) of p-aminophenol and 24.6 g (183 mmol) of 3.3-dimethylbutanoyl chloride being used.

The reaction time is of 2 hours.
25.8 g of N-3,3-dimethylbutanoyl-p-hydroxy-aniline is obtained, which corresponds to a yield of 68%.
The obtained product was characterized as follows:

| | |
|---|---|
| * Melting point (DSC) = | 142 °C |
| * (Acidimetric) equivalent weight = | 205 |
| (Theoretical value) = | 207 |

| * Elemental Analysis : | | | |
|---|---|---|---|
| | C | H | N |
| Experimental, % | 69.1 | 8.3 | 6.9 |
| Theoretical, % | 69.5 | 8.2 | 6.8 |

The structure of the product was confirmed by N.M.R. spectroscopic analysis and mass spectrometry.

## Example 3

### Preparation of N-3-cyclopentylpropanoyl-p-hydroxy-aniline

The product of the title is prepared by operating in the same way as of Example 1, with 20 g (183 mmol) of p-aminophenol and 14.7 g (91.5 mmol) of 3-cyclopentylpropanoyl chloride being used.
The reaction time is of 2 hours.
21 g of N-3-cyclopentylpropanoyl-p-hydroxy-aniline is obtained, which corresponds to a yield of 98.4%.
The obtained product was characterized as follows:

| | |
|---|---|
| * Melting point (DSC) = | 151 °C |
| * (Acidimetric) equivalent weight = | 231.8 |
| (Theoretical value) = | 233.3 |

| * Elemental Analysis : | | | |
|---|---|---|---|
| | C | H | N |
| Experimental, % | 72.1 | 8.3 | 6.0 |
| Theoretical, % | 72.1 | 8.2 | 6.0 |

The structure of the product was confirmed by N.M.R. spectroscopic analysis and mass spectrometry.

## Example 4

### Preparation of N-4-chlorobutanoyl-p-hydroxyaniline

20 g (183 mmol) of p-aminophenol dissolved in 120 ml of dioxane is charged to a 4-necked flask of 250 ml equipped with magnetic stirrer, thermometer and reflux condenser, by operating under a blanketing atmosphere of an inert gas.

To this solution 12.9 g (91.5 mmol) of 4-chlorobutanoyl chloride dissolved in 30 ml of dioxane is then added dropwise over a 15-minutes time. The so obtained mixture is then heated to 58° C and is kept two hours at said temperature; at the end, p-aminophenol hydrochloride formed is filtered off.

The residual solution is poured in 4 litres of petroleum ether and the precipitate is then filtered off, washed with petroleum ether (4 portions of 500 ml each), and is dried in vacuo at 120° C for 4 hours.

18 g of N-4-chlorobutanoyl-p-hydroxyaniline, equivalent to a yield of 92%, is obtained.

The obtained product was characterized as follows:

| | |
|---|---|
| * Melting point (DSC) =<br>* (Acidimetric) equivalent weight =<br>(Theoretical value) = | 104° C<br>214<br>213.7 |

| * Elemental Analysis : | | | | |
|---|---|---|---|---|
| | C | H | N | Cl |
| Experimental, % | 56.2 | 5.8 | 6.5 | 16.4 |
| Theoretical, % | 56.2 | 5.7 | 6.6 | 16.5 |

The structure of the product was confirmed by N.M.R. spectroscopic analysis and mass spectrometry.

## Example 5

84 g of bisphenol A, 3.13 g of N-pivaloyl-p-hydroxyaniline (4.4% by mol relatively to bisphenol A), 65.2 g of sodium hydroxide dissolved in 650 ml of water, 20 mg of sodium dithionite (as a reducing agent in order to prevent coloured products from being formed) and 7.4 ml of an 0.05 N aqueous solution of triethylamine are charged under a nitrogen stream to a glass reactor of 3 litres of capacity, kept at the controlled temperature of 25° C.

1,300 ml of methylene chloride is then added, and 44 g of phosgene gas is bubbled within a 30-minutes time through the resulting mixture, while this latter is being kept vigorously stirred.

The reaction is made proceed for 2 hours, with aqueous sodium hydroxide (at 20% by weight) being added in order to keep the reaction mixture at a pH value higher than 11.

At the end the reaction mixture is diluted with 500 ml of methylene chloride and the organic phase is separated and washed, in the stated sequence, with 300 ml of water (twice), 800 ml of 0.15 N sodium hydroxide (3 times), 600 ml of water (twice), 800 ml of 0,1 N hydrochloric acid and finally with portions of 600 ml of water until neutral washes are obtained.

The polymer is then recovered by distilling off the organic solvent, is dried and is ground until a powder is obtained.

The characteristics of the so obtained polycarbonate are reported in Table 1.

As regards, in particular, the impact strength, measured within the temperature range of from 23 to 0° C, in Table 1 the values relevant to 10 samples, prepared according to ASTM D 256, are reported.

The figures quoted in brackets indicate the number of samples showing a determined behaviour.

## Example 6

Example 5 is repeated with the same operating modalities and amounts of reactants, except that 3.36 g of N-3,3-dimethylbutanoyl-p-hydroxyaniline (4.4% by mol relatively to bisphenol A) is used in lieu of N-pivaloyl-p-hydroxyaniline.

The characteristics of the so obtained polymer are reported in Table 1.

Example 7

Example 5 is repeated with the same operating modalities and amounts of reactants, except that 2.43 g of p-tert.-butylphenol (4.4% by mol relatively to bisphenol A) is used in lieu of N-pivaloyl-p-hydroxyaniline.

The characteristics of the so obtained polymer are reported in Table 1.

Example 8

286.1 g of chloroformyl-capped polycarbonate oligomers (number average molecular weight - 690; chloroformyl end groups = 2,796 meq/kg; hydroxy end groups 103 meq/kg), prepared from bisphenol A and phosgene, is dissolved in 1,227 ml of methylene chloride and the resulting solution is charged, under a nitrogen stream, to a glass reactor of 2.5 l of capacity, kept at the controlled temperature or 25 °C.

The following are then added to said mixture, kept mechanically stirred by means of a double-anchor stirring means (running at 300 rpm), in the order shown:

* 70 ml of water containing 2.5 g of sodium hydroxide,
* 10.8 g of N-pivaloyl-p-hydroxyaniline (4.1% by mol relatively to total bisphenol A),
* 31 mg of sodium dithionite, and
* 8 ml of an 0,05 N aqueous solution of triethylamine.

After 40 minutes, 400 ml of water containing 79.5 g of bisphenol A, 29.1 g of sodium hydroxide and 31 mg of sodium dithionite are added.

Then 131.2 ml of an aqueous solution of sodium hydroxide at 20% by weight is added to the mixture within a 10-minutes time, by using a metering pump.

Three hours later, the reaction mixture is poured in 3 l of methylene chloride and the organic phase is then separated and washed, in the order stated, with 900 ml of water (twice), 1,300 ml of 0.15 N aqueous sodium hydroxide (3 times), 900 ml of water (twice), 1,300 ml of 0.1 N hydrochlorid acid, and, finally, with portions of 900 ml of water until neutral washes are obtained.

The polymer is recovered by distilling off the organic solvent, is dried and is ground until a powder is obtained.

The characteristics of the so obtained polycarbonate are reported in Table 1.

Example 9

Example 8 is repeated with the same operating modalities and amounts of reactants, except that 13.1 g of N-3-cyclopentylpropanoyl-p-hydroxyaniline (4.1% by mol relatively to total bisphenol A) is used in lieu of N-pivaloyl-p-hydroxyaniline.

The characteristics of the so obtained polycarbonate are reported in Table 1.

Example 10

Example 8 is repeated with the same operating modalities and amounts of reactants, except that 11.6 g of N-3,3-dimethylbutanoyl-p-hydroxyaniline (4.1% by mol relatively to total bisphenol A) is used in lieu of N-pivaloyl-p-hydroxyaniline.

The characteristics of the so obtained polycarbonate are reported in Table 1.

Example 11

Example 8 is repeated with the same operating modalities and amounts of reactants, except that 12.0 g of N-4-chlorobutanoyl-p-hydroxyaniline (4.1% by mol relatively to total bisphenol A) is used in lieu of N-pivaloyl-p-hydroxyaniline.

The characteristics of the so obtained polycarbonate are reported in Table 1.

## Example 12

Example 8 is repeated with the same operating modalities and amounts of reactants, except that 8.32 g of p-tert.-butylphenol (4.1% by mol relatively to total bisphenol A) is used in lieu of N-pivaloyl-p-hydroxyaniline.

The characteristics of the so obtained polymer are reported in Table 1.

Table 1

| | Inherent viscosity 20 °C $CH_2Cl_2$ | Impact Strength (Izod) (j/m) | | | MFI | $T_g$ | VICAT |
|---|---|---|---|---|---|---|---|
| Example | (dl/g) | 23 °C | 10 °C | 0 °C | (300 °C 1.2 kg) | (°C) | (°C) |
| 5 | 0.451 | 695 | 590 (6)<br>145 (4) | 560 (5)<br>125 (5) | 22 | 150 | 150.5 |
| 6 | 0.472 | 640 | 600 | 550 (5)<br>135 (5) | 26 | 152 | 151.5 |
| 7 | 0.465 | 655 | 580 (1)<br>140 (9) | 135 | 18.5 | 149 | 150.5 |
| 8 | 0.461 | 660 | 585 (5)<br>135 (5) | 555 (4)<br>115 (6) | 22.5 | 150 | 151 |
| 9 | 0.457 | 640 | 605 (9)<br>160 (1) | 550 (2)<br>120 (8) | 24.5 | 150 | 151 |
| 10 | 0.468 | 645 | 590 | 530 (6)<br>130 (4) | 28 | 151 | 151 |
| 11 | 0.477 | 680 | 685 (9)<br>125 (1) | 670 (7)<br>140 (3) | 22 | 150 | 151 |
| 12 | 0.463 | 660 | 595 (1)<br>130 (9) | 120 | 19 | 149 | 150 |

**Claims**

1. Linear, thermoplastic, aromatic polycarbonates having an average viscosimetric molecular weight comprised within the range of from 10,000 to 30,000, endowed with high fluidity in the molten state, deriving from:

(1) at least one dihydroxyaromatic compound having the formula:

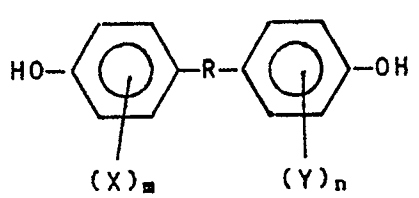

(I)

wherein:

R is a single bond, or a linear or branched, either substituted or non-substituted, alkylene radical of from 1 to 5 carbon atoms, or a group selected from among O, S, $SO_2$, CO;

X, Y which can be either equal to, or different from, each other, are H or $CH_3$,

m, n which can be either equal to or different from each other, are integers comprised within the range of from 1 to 4;

(2) a carbonate precursor;

(3) at least one phenol-amidic compound, as chain capping agent, having the formula:

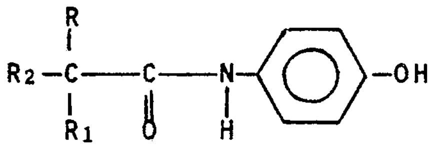

(II)

wherein:

R, $R_1$, which can be either equal to, or different from, each other, are H or $CH_3$;

$R_2$ is an either linear or branched alkyl radical, containing from 1 to 7 carbon atoms, or a cycloalkyl or alkylene-cycloalkyl radical of from 5 to 7 carbon atoms, with said alkyl, cycloalkyl or alkylene-cycloalkyl radicals possibly bearing a halogen atom.

2. Polycarbonates according to claim 1, characterized in that said carbonate precursor (2) is selected from among phosgene or aryl, alkyl or arylalkyl esters of carbonic acid, or chloroformyl-capped polycarbonate oligomers having a molecular weight comprised within the range of from 400 to 2,000, obtained by means of the reaction of phosgene with a portion of the total amount of the dihydroxyaromatic compound (I).

3. Polycarbonates according to claim 1, characterized in that they have an average viscosimetric molecular weight comprised within the range of from 15,000 to 25,000.

4. Polycarbonates according to claim 1, characterized in that the dihydroxyaromatic compound (1) is selected from among:

* 4,4′-dihydroxybiphenyl;
* 2,2-bis-(4-hydroxyphenyl)-propane;
* 2,2-bis-(3,5-dimethyl-4-hydroxyphenyl)-propane;
* bis-(4-hydroxyphenyl)-methane.

5. Polycarbonates according to claim 1, characterized in that the compound (3) is selected from among:

* N-pivaloyl-p-hydroxyaniline;
* N-3,3-dimethyl-butanoyl-p-hydroxyaniline;
* N-3-cyclopentyl-propanoyl-p-hydroxyaniline;
* N-4-chloro-butanoyl-p-hydroxyaniline;
* N-butanoyl-p-hydroxyaniline.

6. Process for preparing the polycarbonates according to claims from 1 to 5, characterized in that

(1) a dihydroxyaromatic compound falling within the scope of formula (I),

(2) a carbonate precursor,

(3) a phenolamidic compound of formula (II), as the molecular weight regulator agent,

are reacted, with the molar ratio of (3):(1) being comprised within the range of from 2:100 to 10:100.

7. Process according to claim 6, characterized in that said molar ratio of (3):(1) is comprised within the range of from 3.5:100 to 7:100.

8. Process according to claim 6, characterized in that the carbonate precursor is selected from among phosgene or aryl, alkyl or arylalkyl esters of carbonic acid, or chloroformyl-capped polycarbonate oligomers having a molecular weight comprised within the range of from 400 to 2,000, obtained by means of the reaction of phosgene with a portion of the total amount of the dihydroxyaromatic compound (I).

9. Process according to claim 8, characterized in that the precursor of carbonate is a chloroformyl-capped polycarbonate oligomer.